Europäisches Patentamt

European Patent Office

Office européen des brevets

(11) Veröffentlichungsnummer: **0 225 851**
B1

# (12) EUROPÄISCHE PATENTSCHRIFT

(45) Veröffentlichungstag der Patentschrift:
20.06.90

(51) Int. Cl.⁵: **B62C 3/00**, B60G 21/04,
B60G 11/00

(21) Anmeldenummer: 86810559.4

(22) Anmeldetag: 03.12.86

(54) Radaufhängevorrichtung für ein langsam fahrendes, geländegängiges Fahrzeug, insbesondere für einen Pferdewagen.

(30) Priorität: 03.12.85 CH 5148/85

(43) Veröffentlichungstag der Anmeldung:
16.06.87 Patentblatt 87/25

(45) Bekanntmachung des Hinweises auf die Patenterteilung:
20.06.90 Patentblatt 90/25

(84) Benannte Vertragsstaaten:
AT CH DE ES FR GB IT LI NL

(56) Entgegenhaltungen:
CH-A- 362 612
FR-A- 690 227
FR-A- 785 463
GB-A- 634 111
US-A- 2 164 602
US-A- 2 169 336
US-A- 2 186 065
US-A- 4 470 611

**Die Akte enthält technische Angaben, die nach dem Eingang der Anmeldung eingereicht wurden und die nicht in dieser Patentschrift enthalten sind.**

(73) Patentinhaber: Iseli, Karl, Mittlere Schwande,
CH-6354 Vitznau(CH)

(72) Erfinder: Iseli, Karl, Mittlere Schwande,
CH-6354 Vitznau(CH)

(74) Vertreter: Schmauder, Klaus Dieter et al, c/o Schmauder & Wann Patentanwaltsbüro Nidelbadstrasse 75,
CH-8038 Zürich(CH)

ACTORUM AG

## Beschreibung

Die Erfindung betrifft eine Radaufhängevorrichtung für ein geländegängiges Fahrzeug, insbesondere für einen Pferdewagen, gemäss Oberbegriff des Anspruches 1.

Pferdewagen besitzen Starrachsen, an denen die Räder befestigt sind und die an beiden Seiten über Blattfederpakete mit dem Rahmen des Fahrzeuges oder einem Lenkgestell desselben verbunden sind. Solche Radaufhängevorrichtungen haben in baulicher Hinsicht den Nachteil, dass die ausladenden Blattfederpakete ein grosses Bauvolumen beanspruchen. Besonders nachteilig ist es allerdings, dass solche Radaufhängevorrichtungen sehr empfindlich auf einseitige Bodenunebenheiten reagieren. Trifft ein derart ausgerüstetes Fahrzeug einseitig auf eine plötzliche Bodenunebenheit, so führt dies sofort zu einer plötzlichen Lageveränderung des Fahrzeuges, wodurch Ladungen verrutschen, oder gar herausgeschleudert werden können und das Fahrzeug in Extremfällen sogar zum Umstürzen gebracht wird. Derartige Fahrzeuge bieten auch einen schlechten Fahrkomfort.

Aus der US-A 4 470 611 ist eine Radaufhängevorrichtung für ein geländegängiges Fahrzeug der eingangs genannten Art bekannt. Bei dieser Radaufhängevorrichtung sind die Achszapfen an unteren Querlenkern angeordnet, die gelenkig mit einem Fahrzeugrahmen verbunden sind. An einem vertikalen Ausleger des Fahrzeugrahmens ist ein oberer kleinerer Querlenker angeordnet, der über eine Koppelstange oder einen Stossdämpfer mit Feder mit dem unteren Querlenker verbunden ist. Die oberen Querlenker beider Radseiten sind mit vertikalen Auslegern ausgerüstet und über eine Koppelstange oder einen Stossdämpfer miteinander verbunden. Dadurch, dass die Querlenker jeder Radseite mit grossem gegenseitigem Abstand direkt am Fahrzeugrahmen angeordnet sind, muss das Fahrzeug für eine solche Radaufhängevorrichtung speziell konzipiert sein, sodass die Radaufhängung nicht als Bausatz zum Umrüsten bestehender Fahrzeuge und schon gar nicht von Pferdewagen geeignet ist. Im übrigen erbringt diese Radaufhängevorrichtung ein sehr labiles und unruhiges Fahrverhalten, da sich die Federn der Radseiten jeweils am oberen Querlenker abstützen. Dadurch wird ein Teil der Radstösse nach oben an den Fahrzeugrahmen und über die die oberen Querlenker verbindende Koppelstange auch auf die andere Radseite übertragen, wodurch die andere Radseite auf jeden Radstoss heftig reagiert, so dass die Radaufhängevorrichtung insgesamt zu einem unruhigen Fahrverhalten führt.

Aus der FR-A 785 463 bzw. der DE-A 719 488 ist eine Radaufhängevorrichtung für Kraftfahrzeuge bekannt, bei der die Achszapfen der Räder jeder Radseite über obere und untere Querlenker mit einem Hohlträger verbunden sind. Jeder untere Querlenker enthält einen Ausleger der mit einer Schraubenfeder im Hohlträger zusammenwirkt. Der Hohlträger selbst ist mittels eines zentralen vertikalen Zapfens am Fahrzeugrahmen befestigt und überdies durch beidseits des Zapfens angeordnete Federn abgestützt. Auch diese Ausbildung der Radaufhängevorrichtung ist als Bausatz zum Umrüsten bestehender Fahrzeuge und insbesondere von Pferdewagen nicht geeignet, da der zentrale vertikale Zapfen eine spezielle Ausbildung des Fahrzeugrahmens verlangt. Ausserdem ermöglicht diese Radaufhängevorrichtung keinen Ausgleich bei einer einseitigen Stossbelastung, da keine Ausgleichsvorrichtung zwischen den Radseiten vorgesehen ist und wirkt deshalb praktisch wie eine Starrachse.

Weiter ist aus der US-A 2 164 602 eine Radaufhängevorrichtung für Kraftfahrzeuge bekannt, bei der auf jeder Radseite Achszapfen über obere und untere Querlenker mit einem Hohlträger verbunden sind, wobei die unteren Querlenker vertikale Ausleger aufweisen, die mit einer im Hohlträger angeordneten Feder verbunden sind. Da die Feder zwischen beiden Radseiten durchgehend ist, und sich an beiden Auslegern der Querlenker abstützt, wird jede Stossbelastung einer Radseite auf die andere weitergegeben, wodurch sich ein unruhiges Fahrverhalten der Radaufhängevorrichtung ergibt. Die Radaufhängevorrichtung ist überdies mit einem die Querlenker beider Radseiten verbindenden Stabilisator versehen, der bei Stossbelastungen nicht ausgleichend wirkt, sondern das nicht stossbelastete Rad in die gleiche Richtung wie das stossbelastete Rad bewegt und dadurch im Sinne einer Starrachse eher verstärkend als ausgleichend wirkt.

Aufgabe der Erfindung ist es, eine Radaufhängevorrichtung für ein geländegängiges Fahrzeug, insbesondere für einen Pferdewagen zu schaffen, die ein geringes Bauvolumen beansprucht und so als Bausatz zum Umrüsten bestehender Fahrzeuge geeignet ist und insbesondere eine verminderte Empfindlichkeit gegenüber einseitigen Bodenunebenheiten aufweist.

Die Aufgabe wird bei der eingangs genannten Radaufhängevorrichtung erfindungsgemäss durch die kennzeichnenden Merkmale des Anspruches 1 gelöst.

Die Radaufhängevorrichtung mit dem Hohlträger, mit der darin angeordneten Federvorrichtung und dem Stossdämpfer beansprucht nur ein geringes Bauvolumen, so dass sie als Bausatz auch nachträglich an viele Fahrzeuge, insbesondere an Pferdewagen angebracht werden kann. Dadurch, dass die Federn jeder Radseite an einem festen Anschlag im Hohlträger abgestützt sind, werden Stossbelastungen der Räder durch Bodenunebenheiten horizontal abgefangen und wirken sich praktisch nicht vertikal auf das Fahrzeug und auch nicht direkt auf das stossunbelastete Rad aus. Allerdings führt eine Stossbelastung auf ein Einzelrad über den Stossdämpfer zu einer gedämpften Gegenreaktion am anderen Rad der Radaufhängevorrichtung, so dass dieses in entgegengesetzter Richtung schwingt, einen gewissen Höhenausgleich bewirkt und ein starkes Neigen des Fahrzeuges verhindert. Die Radaufhängevorrichtung ermöglicht also eine gewisse Stossabsorption und gleichzeitig einen gewissen Höhenausgleich, wodurch sich die Fahreigenschaften des Fahrzeuges für Personen und Ladung wesentlich verbessern.

Vorteilhafte Ausführungsbeispiele der erfindungsgemässen Radaufhängevorrichtung sind in den Ansprüchen 2 bis 7 beschrieben.

Die Radaufhängevorrichtung wird zweckmässigerweise nach Anspruch 2 ausgebildet, wodurch sich einerseits der Hohlträger am Fahrzeugrahmen einfach befestigen lässt und andererseits eine gute Torsionssteifigkeit des Hohlträgers erreicht wird. Ausserdem lassen sich die Querlenker an einem solchen Hohlträger einfacher befestigen. Falls der Hohlträger wenigstens teilweise unten offen ist, so wird auch die Zugänglichkeit der Einbauteile verbessert. Vorteilhafter ist jedoch eine Ausbildung nach Anspruch 3, da die Rohrform des Hohlträgers eine einfache Herstellung ermöglicht, sehr gute Torsionssteifigkeit aufweist, der Feder eine gute Führung und Abstützung gewährleistet und auf einfache Weise mindestens einen staubdichten Abschluss an beiden Seiten ermöglicht.

Die Querlenker können beliebige Form aufweisen und beispielsweise aus Stangen bestehen. Besonders vorteilhaft ist jedoch eine Ausbildung nach Anspruch 4, da sich solche Querlenker einfach herstellen lassen und eine ausreichende Festigkeit besitzen.

Die Fahreigenschaften einer Radaufhängevorrichtung lassen sich verbessern, wenn diese nach Anspruch 5 ausgestaltet ist, sodass Spuränderungen und damit Querbewegungen der Räder weitgehend vermieden werden.

Für die Ausgestaltung des am unteren Querlenker angeordneten Auslegers ergeben sich die verschiedensten Möglichkeiten. Besonders vorteilhaft ist eine Ausgestaltung nach Anspruch 6, wenn ein solcher Querlenker mit dem Ausleger beispielsweise aus einem Stahlblech durch Schneiden und Biegen hergestellt wird.

Die Radaufhängevorrichtung ist sowohl für ungelenkte wie für gelenkte Achsen geeignet. In einer Ausbildung nach Anspruch 7 kann die gesamte Radaufhängevorrichtung um eine vertikale Achse geschwenkt werden, wie dies bei Pferdewagen üblich ist.

Es ist jedoch auch eine Ausgestaltung möglich, bei der die Querlenker über ein Zwischenglied mit dem Achsschenkel verbunden sind, wobei der Achsschenkel über mindestens einen Achsschenkelbolzen gelenkig an dem Zwischenglied angeordnet ist und einen Lenkhebel und/oder einen Spurstangenhebel aufweist. Bei einer solchen Ausbildung bleibt der Hohlträger beim Auslenken der Räder unbewegt und die Räder schwenken einzeln aus, wie dies im Kraftfahrzeugbau üblich ist.

Besonders vorteilhaft ist die Verwendung der Radaufhängevorrichtung nach der Erfindung für Pferdewagen, insbesondere Pferdewagen, die wettkampfmässig zum Einsatz kommen, beispielsweise bei Marathonveranstaltungen.

Ausführungsbeispiele der erfindungsgemässen, als Bausätze ausgebildeten Radaufhängevorrichtung werden nachfolgend anhand schematischer Zeichnungen näher beschrieben, dabei zeigen:

Figur 1 eine erste Radaufhängevorrichtung mit getrennten Federn für jede Radseite und gemeinsamem Stossdämpfer, in normalbelastetem Zustand, in Ansicht auf die Längsseite, wobei die rechte Seite im Längsschnitt dargestellt ist;

Figur 2 die Radaufhängevorrichtung der Figur 1 im Schnitt II-II;

Figur 3 die Radaufhängevorrichtung der Figur 1 bei einseitiger Belastung durch eine Bodenunebenheit; und

Figur 4 eine zweite Radaufhängevorrichtung mit einem rohrförmigen Hohlträger in der Darstellungsweise der Figur 1.

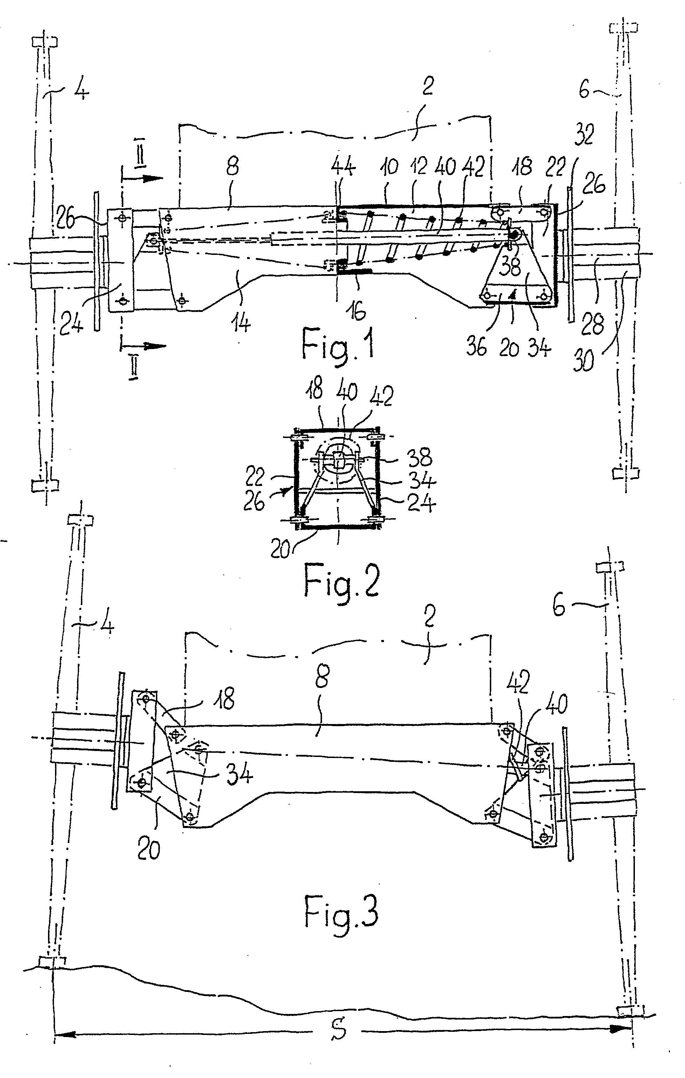

Die Figuren 1 bis 3 zeigen eine Radaufhängevorrichtung, die an einem strichpunktiert angedeuteten Fahrzeugrahmen 2 befestigt ist und ebenfalls strichpunktiert angedeutete Räder 4, 6 trägt. Die Radaufhängevorrichtung enthält einen Hohlträger 8, der als Kastenprofil ausgebildet ist und ein rechteckiges Querschnittsprofil aufweist. Eine obere Wand 10 des Hohlträgers 8 ist am Fahrzeugrahmen 2 befestigt. Seitlich schliessen sich nach unten Seitenwände 12, 14 an. Im mittleren Bereich des Hohlträgers sind die Seitenwände 12, 14 durch eine Bodenwand 16 miteinander verbunden. Die Seitenabschnitte des Hohlträgers 8 sind nach unten offen.

An beiden Seiten des Hohlträgers 8 sind jeweils mit Abstand voneinander ein oberer Querlenker 18 und ein unterer Querlenker 20 an den Seitenwänden 12, 14 des Hohlträgers angelenkt. Die Querlenker 18, 20 sind mit seitlichen Schenkeln 22, 24 eines Achsschenkels 26 gelenkig verbunden, der im horizontalen Querschnitt U-förmig ausgestaltet ist. Der Achsschenkel 26 trägt einen Achszapfen 28 zur Aufnahme der Nabe 30 eines Rades 4 bzw. 6. Ferner trägt der Achszapfen 28 eine drehbar angeordnete Bremsscheibe 32, die mit der Nabe 30 verbindbar ist.

Der obere Querlenker 18 und der untere Querlenker 20 sind im vertikalen Querschnitt U-förmig ausgebildet, wobei die offenen Seiten der Querlenker gegeneinander weisen. Der obere Querlenker 18 ist kürzer als der untere Querlenker 20 und zwar derart, dass beim Einfedern des Rades die Spur S mindestens annähernd gleich bleibt, wie den Figuren 1 und 3 entnommen werden kann. Am unteren Querlenker ist ein zweiarmiger Ausleger 34 befestigt, der gegen den oberen Querlenker 18 weist. Die Arme sind einstückig an den seitlichen Schenkeln 36 des unteren Querlenkers 20 angeformt. An dem Ausleger 34 ist über einen Bolzen 38 ein für beide Radseiten gemeinsamer Stossdämpfer 40 befestigt. Ferner stützt sich an dem Bolzen jeder Seite der Radaufhängung eine für jede Radseite getrennte Feder 42 ab, die koaxial um den Stossdämpfer angeordnet ist und sich an einem zentralen Anschlag 44 in der Mitte des Hohlträgers abstützt.

Die Radaufhängevorrichtung lässt sich weitgehend aus Stahlblech und Profilstücken durch Schneiden, Biegen, Verschweissen und Bohren herstellen und ist äusserst preiswert.

Wie insbesondere aus Figur 3 ersichtlich ist, gewährleistet die Radaufhängevorrichtung eine Einzelradaufhängung, die einseitige Bodenunebenheiten weitgehend ausgleichen kann, sodass entsprechende Bewegungen des Rades nur reduziert an den Fahrzeugrahmen weitergegeben werden. Insbesondere durch die Kopplung der beiden Seiten der Radaufhängevorrichtung mittels des gemeinsamen Stossdämpfers 40 wird beim Einfedern eines Rades 4 ein Impuls an die Aufhängung des anderen Rades 6 weitergegeben, sodass die Aufhängung in entgegengesetzter Richtung bewegt wird, wodurch ein Anheben des Hohlträgers erfolgt. Dies hat zur Folge, dass der Hohlträger 8 und der damit verbundene Fahrzeugrahmen 2 selbst bei grossen einseitigen Stossbelastungen der Räder durch Bodenunebenheiten praktisch weitgehend waagrecht gehalten wird, wie aus Figur 3 ersichtlich ist. Eine solche Radaufhängung vermittelt dem Fahrzeug einen sehr guten Fahrkomfort und schont die Ladung des Fahrzeuges.

Die Radaufhängevorrichtung ist für langsam fahrende, geländegängige Fahrzeuge, insbesondere für einen Pferdewagen geeignet. Solche Pferdewagen, insbesondere wenn sie im Wettkampfsport, beispielsweise bei Marathonfahrten, zum Einsatz kommen, müssen grosse, vielfach einseitige Bodenunebenheiten überwinden, sodass grosse Federwege erforderlich sind, die beispielsweise Grössenordnungen von 10 bis 20 cm ausmachen können. Auf einem solchen Gelände mit solchen Unebenheiten muss sich ein Fahrzeug mit einer Geschwindigkeit bis zu 30 km/h bewegen können. In der Regel beträgt die Fahrgeschwindigkeit beim Marathonsport 18 bis 28 km/h.

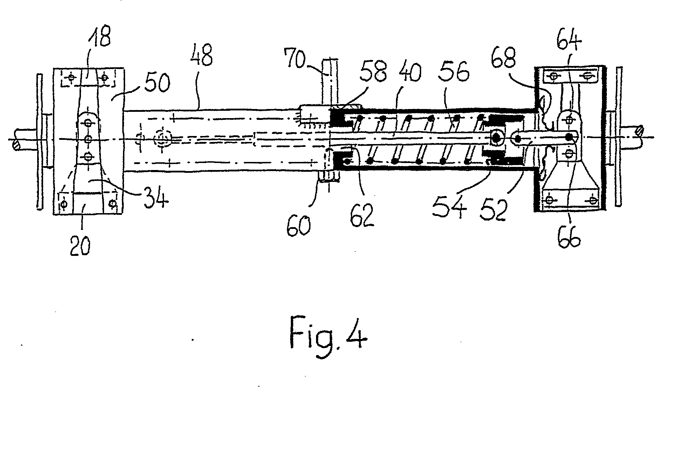

Die Figur 4 zeigt eine weitere Radaufhängevorrichtung, bei der der Hohlträger 48 als Rohr ausgebildet ist. An beiden Enden des Rohres sind jeweils vertikal ausgerichtete, im Querschnitt U-förmige Halter 50 angeordnet, an denen der obere Querlenker 18 und der untere Querlenker 20 angelenkt sind. An jeder Radseite ist der Ausleger 34 am unteren Querlenker 20 über eine Koppelstange 52 mit einem Führungsglied 54 verbunden, welches in dem rohrförmigen Hohlträger 48 verschieblich gelagert ist. Jede Seite der Radaufhängevorrichtung enthält eine eigene Feder 56, die einerseits am Führungsglied 54 befestigt ist und andererseits an einem zentralen Halteglied 58 in der Mitte des Hohlträgers 48. Das Halteglied 58 ist mittels Schrauben 60 im rohrförmigen Hohlträger 48 fixiert. Ein für beide Radseiten gemeinsamer Stossdämpfer 40 ist an den Führungsgliedern 54 befestigt und erstreckt sich durch eine Öffnung 62 im zentralen Halteglied 54.

Am Ausleger 34 sind mehrere übereinander angeordnete Bohrungen 64 vorhanden, an denen die Koppelstange 52 mittels eines Bolzens 66 wahlweise angeordnet werden kann; dadurch lassen sich die Feder- bzw. Stossdämpfereigenschaften einer Radaufhängevorrichtung einstellen, d.h. an ein Fahrzeug und/oder die Fahrbedingungen anpassen. Eine die Koppelstange 52 umgebende und an dieser befestigte Manschette 68 ist überdies am Halter 50 befestigt und dient zum mindestens staubfreien Abdichten des Innenraumes des Hohlträgers.

Bei dieser Radaufhängevorrichtung ist ferner am Höhlträger 48 ein senkrecht hochstehender Zapfen 70 angeordnet, mit dem die Radaufhängevorrichtung als schwenkbare Achse an einem Fahrzeugrahmen befestigbar ist. Die Radaufhängevorrichtung kann auch mit anderen üblichen Schwenkvorrichtungen ausgestattet sein. Ausserdem kann an der Radaufhängevorrichtung in nicht näher dargestellter Weise eine Deichsel zum Anschirren eines oder mehrerer Pferde befestigt sein.

Es sind noch zahlreiche weitere Ausführungsbeispiele denkbar, insbesondere sind einzelne Merkmale der beschriebenen Ausführungsbeispiele auch untereinander austauschbar.

Bezugszeichenliste

    S Spur
    2 Fahrzeugrahmen
    4 Rad, links
    6 Rad, rechts
    8 Hohlträger
    10 obere Wand
    12 Seitenwand
    14 Seitenwand
    16 Bodenwand
    18 oberer Querlenker
    20 unterer Querlenker
    22 Schenkel von 26
    24 Schenkel von 26
    26 Achsschenkel
    28 Achszapfen
    30 Nabe von 4 bzw. 6
    32 Bremsscheibe
    34 Ausleger
    36 Schenkel von 20
    38 Bolzen
    40 Stossdämpfer
    42 Feder
    44 Anschlag
    48 Hohlträger
    50 Halter
    52 Koppelstange
    54 Führungsglied
    56 Feder
    58 Halteglied
    60 Schraube
    62 Öffnung von 58
    64 Bohrung
    66 Bolzen
    68 Manschette
    70 Zapfen

**Patentansprüche**

1. Radaufhängevorrichtung für ein geländegängiges Fahrzeug, insbesondere für einen Pferdewagen, wobei Achszapfen (28) der Räder (4, 6) jeder Radseite jeweils über zwei übereinanderliegende Querlenker (18, 20) mit dem Rahmen des Fahrzeuges verbunden und mittels Federn (42, 56) abgestützt sind und wobei die Querlenker beider Radseiten über einen Stossdämpfer (40) miteinander verbunden sind, dadurch gekennzeichnet, dass sie als ein zum Umrüsten eines Fahrzeuges geeigneter Bausatz ausgebildet ist, wobei die Querlenker (18, 20) in an sich bekannter Weise an einem mit einem Fahrzeugrahmen verbindbaren Hohlträger (8, 48) angelenkt sind, in dem die Federn (42, 56) und der Stossdämpfer (40) koaxial angeordnet sind, wobei sich die Federn (42, 56) jeder Radseite an einem festen Anschlag (44, 58) im Hohlträger abstützen und an jeder Radseite die Feder (42, 56) und der Stossdämpfer (40) mit einem vertikal nach oben weisenden Ausleger (34) des unteren Querlenkers (20) gekoppelt sind.

2. Radaufhängevorrichtung nach Anspruch 1, dadurch gekennzeichnet, dass der Hohlträger (8) ein rechteckiges Querschnittprofil aufweist und gegebenenfalls mindestens an den äusseren Abschnitten nach unten offen ist.

3. Radaufhängevorrichtung nach Anspruch 1, dadurch gekennzeichnet, dass der Hohlträger (48) rohrförmig ausgebildet ist und an den Enden Halter (50) aufweist, an denen die Querlenker (18, 20) angelenkt sind, wobei der Ausleger (34) des unteren Querlenkers (20) über eine Koppelstange (52) mit einem kolbenartigen Führungsglied (54) im Hohlträger (48) verbunden ist, an dem sich die Feder (56) abstützt und der Stossdämpfer (40) angelenkt ist, wobei um die Koppelstange (52) eine mit dem Hohlkörper verbundene Dichtungsmanschette (68) angeordnet ist.

4. Radaufhängevorrichtung nach Anspruch 1, dadurch gekennzeichnet, dass der obere und der untere Querlenker (18, 20) ein U-förmiges Querschnittsprofil aufweisen, wobei die offenen Seiten gegeneinander gerichtet sind und die seitlichen Schenkel (20) der Profile gelenkig mit dem Hohlträger (8, 48) und dem Achsschenkel (26) verbunden sind.

5. Radaufhängevorrichtung nach Anspruch 1, dadurch gekennzeichnet, dass der obere Querlenker (18) derart kürzer ist als der untere Querlenker (20), dass die Spur (S) der Räder (4, 6) beim Einfedern mindestens annähernd gleich bleibt.

6. Radaufhängevorrichtung nach Anspruch 1, dadurch gekennzeichnet, dass der Ausleger (34) zweiarmig ausgebildet und vorzugsweise einstückig mit dem unteren Querlenker (20) ausgeformt ist.

7. Radaufhängevorrichtung nach Anspruch 1, dadurch gekennzeichnet, dass der Hohlträger (48) um eine zentrale vertikale Achse, vorzugsweise um einen vertikalen Zapfen (70) schwenkbar am Fahrzeugrahmen befestigbar ist.

## Claims

1. Wheel suspension device for a cross-country vehicle, particularly for a horse-drawn vehicle, whereby the stub axles (28) of the wheels (4, 6) of each wheel side are connected over two superimposed transversal links (18, 20) with the vehicle chassis and supported by means of springs (42, 56) and whereby the tranversal links of both wheel sides are connected with each other by a shock absorber (40), characterized by being constructed as an assembly kit suitable to convert a vehicle, whereby the transversal links (18, 20) are joined by an in itself known method to a hollow body (8, 48) connectable to the vehicle chassis, in which the springs (42, 56) and the shock absorber (40) are arranged coaxially, whereby the springs (42, 56) of each wheel side are supported by a fix buffer (44, 58) in the hollow body and on each wheel side the spring (42, 56) and the shock absorber (40) are coupled to a vertically upward pointing arm (34) of the bottom transversal link (20).

2. Wheel suspension device according to claim 1, characterized in that the hollow body (8) shows a square cross-section profile and if necessary is open on its underside at least at the outer sections.

3. Wheel suspension device according to claim 1, characterized in that the hollow body (48) is in form of a tube and provided with brackets (50) at the ends to which the transversal links (18, 20) are hinged, whereby the arm (34) of the bottom transversal link (18, 20) is connected over a coupling-rod (52) to a piston-like guide-part (54) in the hollow body (48), onto which the spring (56) is mounted and the shock absorber (40) joined, whereby a sleeve-gasket (68) is connected around the coupling-rod (52) and mounted to the hollow body.

4. Wheel suspension device according to claim 1, characterized in that the upper and the bottom transversal link (18, 20) show a U-shaped cross-section profile, whereby the open sides are directed towards each other and the lateral shackles (20) of the profiles are pivotally connected to the hollow body (8, 48) and the axle stub (26).

5. Wheel suspension device according to claim 1, characterized in that the upper transversal link (18) is so much shorter than the bottom transversal link (20) that the track (S) of the wheels (4, 6) when springing stays as close as possible the same.

6. Wheel suspension device according to claim 1, characterized in that the arm (34) is constructed twin-armed and preferably cast in one piece with the bottom transversal link (20).

7. Wheel suspension device according to claim 1, characterized in that the hollow body (48) is pivotally attachable to the vehicle chassis around a centrally vertical axle, preferably around a vertical pin (70).

## Revendications

1. Dispositif de suspension de roue pour un véhicule tout terrain, en particulier pour une voiture à traction par cheval, dans lequel les axes (28) de chacune des roues (4, 6) sont reliés au châssis de la voiture par deux bras obliques superposés (18, 20) et soutenus par des ressorts (42, 56), et où les bras obliques des deux côtés d'un même essieu sont reliés entre eux par un amortisseur de chocs (40), caractérisé en ce qu'il est conçu sous forme de set pour la transformation d'un véhicule, dans lequel les bras obliques (18, 20) sont articulés d'une façon particulière sur un support creux (8, 48) susceptible d'être fixé au châssis de la voiture, support dans lequel les ressorts (42, 56) et l'amortisseur de chocs (40) sont montés de façon coaxiale, en ce que les ressorts s'appuyent sur une butée fixe (44, 58) à l'intérieur du support creux (8, 48) , et en ce que, du côté de la roue, les ressorts (46, 58) et l'amortisseur de chocs (40) sont couplés au bras oblique inférieur (20) par un trapèze (34) pointant à la verticale vers le haut.

2. Dispositif de suspension de roue selon la revendication 1, caractérisé en ce que le support creux (8) est un profilé de section carrée, qui, cas échéant, peut être ouvert sur sa face inférieure au moins sur ses extrémités.

3. Dispositif de suspension de roue selon la revendication 1, caractérisé en ce que le support creux (8) est en forme de tube et présente des supports (50) à ses extrémités, sur lesquels les bras obliques (18, 20) sont articulés, et dans lequel le trapèze (34) du bras oblique inférieur (20) est relié par une barre d'accouplement (52) et un élément de guidage en forme de piston (54) dans le support creux, sur lequel s'appuye le ressort (56) et s'articule l'amortisseur de chocs (40), et en ce qu'une manchette d'étanchéité sertie à l'extrémité du support creux enserre la barre d'accouplement (52).

4. Dispositif de suspension de roue selon la revendication 1, caractérisé en ce que les bras obliques supérieur (18) et inférieur (20) ont un profil en U dont les deux côtés ouverts se front face, et en ce que les branches latérales (20) des profils sont reliés de façon articulée au support creux (8, 48) et à la butée d'axe (26).

5. Dispositif de suspension de roue selon la revendication 1, caractérisé en ce que le bras oblique supérieur (18) est plus court que le bras oblique inférieur (20), de telle façon que la largeur de la trace (5) des roues (4, 6) demeure approximativement constante malgré le travail des ressorts.

6. Dispositif de suspension de roue selon la revendication 1, caractérisé en ce que le trapèze (34) est formé de deux bras qui sont de préférence solidaire du bras oblique inférieur (20).

7. Dispositif de suspension de roue selon la revendication 1, caractérisé en ce que la fixation du support creux (48) au châssis de la voiture lui permet un effet de bascule autour d'un axe vertical central, ou en particulier d'une cheville verticale (70).

Fig.1

Fig.2

Fig.3

Fig.4